# EUROPÄISCHE PATENTSCHRIFT

(11) **EP 1 366 481 B1**
(45) Veröffentlichungstag und Bekanntmachung des Hinweises auf die Patenterteilung: **27.12.2006**
(21) Anmeldenummer: 02700088.4
(22) Anmeldetag: 01.03.2002
(51) Int. Cl.: G09B 23/28

(54) **VORRICHTUNG UND VERFAHREN ZUM WECHSELN EINER FUNKTION EINES VIRTUELLEN INSTRUMENTES**
DEVICE AND METHOD FOR CHANGING THE FUNCTION OF A VIRTUAL INSTRUMENT
DISPOSITIF ET PROCEDE POUR CHANGER UNE FONCTION D'UN INSTRUMENT VIRTUEL

(30) Priorität: 02.03.2001 CH 402012001
(43) Veröffentlichungstag der Anmeldung: 03.12.2003
(73) Patentinhaber: Xitact S.A., 1110 Morges (CH)
(72) Erfinder: BUMANN, Beat, CH-3902 Glis (CH); ZOETHOUT, Jurjen, CH-1004 Lausanne (CH); VUILLEMIN, Ronald, CH-5015 Niedererlinsbach (CH)
(74) Vertreter: Liebetanz, Michael
(86) Internationale Anmeldenummer: PCT/CH2002/000126
(87) Internationale Veröffentlichungsnummer: WO 2002/071368

(56) Entgegenhaltungen:
- WO-A-98/10387
- WO-A-99/39317
- US-A- 5 771 181
- US-A- 6 113 395

## Beschreibung

Die Erfindung betrifft eine Vorrichtung zum Wechseln einer Funktion eines virtuellen Instrumentes, welches für den Einsatz innerhalb einer Simulationseinrichtung für operative Eingriffe vorgesehen ist, wobei verschiedene virtuelle Instrumente über den gleichen realen Handgriff der Simulationseinrichtung verfügen, sowie ein derartiges Verfahren.

Aus dem Stand der Technik sind eine Vielzahl von Simulationseinrichtungen für operative Eingriffe bekannt. Dabei benutzt der Operateur einen Handgriff eines virtuellen Instrumentes, z.B., einer Schere, einer Klemme, eines Skalpells oder ähnlichem, um über eine auf einem Bildschirm dargestellte virtuelle Abbildung des Operationsraumes, z.B. vom Bauchraum oder von einzelnen Gefässen, die zu simulierende Operation durchzuführen. In der Realität muss der Operateur ab und zu das eingesetzte Instrument durch ein anderes ersetzen. Dies geschieht bei endoskopischen Operationen durch Herausziehen des Instrumentes aus dem Trokar und das Einführen des neuen Instrumentes. Bei Gefässoperationen wird beispielsweise der Katheter entfernt und durch einen anderen ersetzt. Im Stand der Technik sind keine Vorrichtungen bekannt, die den die simulierte Operation ausführenden Operateur in einfacher Weise und realitätsnah unterstützen. Aus der US 6,113,395 ist eine Vorrichtung mit den Merkmalen des Oberbegriffs des Anspruchs 1 bekannt, wobei die Ansteuerung zur Auswahl eines anderen Instrumentes unzweckmässig oder kompliziert ist.

Ausgehend von diesem Stand der Technik liegt der Erfindung die Aufgabe zugrunde, ein Verfahren und eine solche Vorrichtung anzugeben, das bzw. die den die simulierte Operation ausführenden Operateur in einfacher Weise und realitätsnah unterstützen.

Diese Aufgabe wird für eine Vorrichtung erfindungsgemäss dadurch gelöst, dass eine Steuerschaltung vorgesehen ist, dass eine definierte Betätigung des Handgriffes vorgegeben ist, so dass bei einer derartigen Betätigung des Handgriffes in der Steuerschaltung eine Eingabemöglichkeit freigeschaltet wird, über die eines aus einer Mehrzahl von virtuellen Instrumenten auswählbar ist, und dass bei Auswahl des virtuellen Instrumentes die Anzeige des ursprünglichen virtuellen Instrumentes durch die Anzeige des gewählten virtuellen Instrumentes ersetzbar ist.

Die erfindungsgemässe Vorrichtung weist den Vorteil auf, dass die virtuellen Instrumente, also insbesondere die dem Handgriff nachgeschaltete Mechanik und Elektronik, nicht ersetzt werden müssen, was normalerweise nur durch einen Fachmann möglich ist, und dass das Herausnehmen des Instrumentes aus dem Trokar bzw. aus einem Gefäss durch ein vordefiniertes Zurückziehen ersetzt wird, wonach sich die Anzeige nach Auswahl des neuen Instrumentes auf dieses umschaltet, ohne dass die die Simulation ausführende Person weitere Arbeiten durchführen muss. Damit kann der Operateur eine simulierte Operation mit verschiedenen Instrumenten durchführen ohne sogar den Handgriff absetzen zu müssen.

Die Auswahl des neuen Instrumentes selber kann durch Anzeige der auswählbaren virtuellen Instrumente auf dem das Operationsfeld anzeigenden Bildschirm geschehen, wonach durch Drehen um und/oder Ziehen entlang der Längsachse des Handgriffs eine Auswahl aus einem Kontextmenü möglich ist. Alternativ kann die Auswahl auch durch eine Sprachsteuerung geschehen, wobei diese durch die Programmierung der Namen der virtuellen Instrumente und/oder durch eine abstrakte Auswahl (z.B. Zahlen) geschehen kann.

Das Eröffnen einer Auswahlmöglichkeit kann einer Initialisierung des virtuellen Instrumentes entsprechen. Dabei wird der Benutzer an dem Handgriff ziehen und das rohrförmige Unterteil des virtuellen Instrumentes gegen die Kraft der in der Aufhängung der Simulationseinrichtung integrierten Antriebe herausziehen und dabei nach Überschreitung eines von einem Kraftsensor zu erfassenden Kraftschwellwertes die Simulationseinrichtung auf eine vorbestimmte Position einstellen, die einmalig geeicht worden ist. Ferner kann dasselbe Prinzip durch Verdrehen des Handgriffes gegen eine steigende Rückstellkraft der Antriebe erreicht werden, wonach nach Überschreitung eines von dem Kraftsensor zu erfassenden Kraftschwellwertes die Simulationseinrichtung auf eine vorbestimmte Winkelposition eingestellt wird. Alternativ ist es auch möglich, dass beispielsweise mit Markierungen und Lichtschranken oder anderen triggernden Messanordnungen das Zurückziehen und/oder Verdrehen des rohrförmige Unterteils festgestellt wird.

Das Verfahren gemäss der Erfindung arbeitet somit wie folgt. Der Bildschirm der Simulationseinrichtung zeigt das Operationsfeld an, wie es der Operateur beispielsweise über ein Endoskop sieht. Dabei sieht der Operateur den simulierten Endabschnitt von einem oder mehreren Instrumenten, insbesondere den simulierten Endabschnitt eines virtuellen Instrumentes, dessen realen Handgriff er in der Hand hält. Dabei ist es unmassgeblich, ob die Vorrichtung ein Force-Feedback (Kraftrückkopplung) umfasst oder nicht.

Durch Zurückziehen des Handgriffs über einen vorgegeben Punkt oder durch ein vordefiniertes mehrfaches Schliessen des Handgriffs oder durch Betätigen eines am Handgriff angeordneten Triggerknopfes wird eine Steuerschaltung der Simulationseinrichtung geschaltet, so dass bei einer derartigen Betätigung des Handgriffes in der Steuerschaltung eine Eingabemöglichkeit freigeschaltet wird. Über diese Eingabemöglichkeit ist eines aus einer Mehrzahl von virtuellen Instrumenten auswählbar.

Dabei kann insbesondere ein Fenster im Sinne eines Kontextmenüs auf dem Bildschirm angezeigt werden. Dieses kann die wählbaren Instrumente untereinander auflisten, so dass bei Drehung oder Zug auf den Handgriff ein Cursor entsprechend die einzelnen Instrumente nacheinander auswählbar macht. Die wählbaren Instrumente können auch um einen Mittelpunkt herum im Kreis aufgelistet sein, wobei dann vorteilhafterweise eine Drehung des Handgriffes im Sinne eines Joysticks die einzelnen Instrumente auswählt.

Nach der (bestätigten) Auswahl des virtuellen Instrumentes wird die Anzeige des ursprünglichen virtuellen Instrumentes durch die Anzeige des gewählten virtuellen Instrumentes ersetzt. Die Bestätigung selber kann auf verschiedene Weisen geschehen. So kann dies durch eine Bewegung anderer Art geschehen, eine Drehung des Handgriffs bei einer Auswahl durch Zug, einem Stossen oder Ziehen des Handgriffs bei einer Auswahl durch eine Drehung. Ferner kann eine einmalige oder mehrmalige Schliessung des Handgriffs als Validierung angesehen werden und schliesslich besteht die Möglichkeit der Validierung durch den besagten Triggerknopf.

Neben der Auswahl durch die Bewegung des Handgriffs kann auch eine Sprachsteuerung vorgesehen sein, wobei parallel die auswählbaren Instrumente auf dem Bildschirm angezeigt werden oder nicht. Die Sprachsteuerung kann das Aussprechen der tatsächlichen Namen der Instrumente, mit oder ohne Steuerwörtern, oder von Codewörten oder Zahlen erfordern, wobei dann eine visuelle Darstellung auf dem Bildschirm vorteilhaft ist.

## Patentansprüche

1. Vorrichtung zum Wechseln einer Funktion eines virtuellen Instrumentes, welches für den Einsatz innerhalb einer Simulationseinrichtung für operative Eingriffe vorgesehen ist, wobei verschiedene virtuelle Instrumente über den gleichen realen Handgriff der Simulationseinrichtung verfügen, mit einer Steuerschaltung, in der durch eine Betätigung des Benutzers eine Eingabemöglichkeit freigeschaltet wird, über die eines aus einer Mehrzahl von virtuellen Instrumenten auswählbar ist, und dass bei Auswahl des virtuellen Instrumentes die Anzeige des ursprünglichen virtuellen Instrumentes durch die Anzeige des gewählten virtuellen Instrumentes ersetzbar ist, **dadurch gekennzeichnet, dass** die Freischaltung durch eine definierte Betätigung des Handgriffes des Benutzers vorgesehen ist, die aus der Gruppe des Zurückziehens des Handgriffes über einen vorbestimmten Punkt in Richtung der Längsachse des Handgriffes oder des zwei- oder mehrfaches Schliessens des Handgriffes innerhalb von vordefinierten Zeitfenstern stammt.

2. Vorrichtung nach Anspruch 1, **dadurch gekennzeichnet, dass** die freigeschaltete Eingabemöglichkeit eine Anzeige der auswählbaren virtuellen Instrumente auf dem das Operationsfeld anzeigenden Bildschirm der Simulationseinrichtung umfasst, dass mit der Steuerschaltung ein Drehen um die Längsachse des Handgriffs als Veränderung des jeweilig ausgewählten virtuellen Instrumentes ansehbar ist und dass mit der Steuerschaltung die Anzeige des jeweilig durch Drehung des Handgriffes gewählten virtuellen Instrumentes auf dem Bildschirm bewirkbar ist und dass die Auswahl des jeweilig gewählten virtuellen Instrumentes durch ein Vorschieben des Handgriffes über den vorbestimmten Punkt oder durch eine Betätigung des Handgriffs validierbar ist.

3. Vorrichtung nach Anspruch 1, **dadurch gekennzeichnet, dass** die freigeschaltete Eingabemöglichkeit eine Anzeige der auswählbaren virtuellen Instrumente auf dem das Operationsfeld anzeigenden Bildschirm der Simulationseinrichtung umfasst, dass mit der Steuerschaltung ein weiteres Herausziehen des Handgriffs entlang seiner Längsachse als Veränderung des jeweilig ausgewählten virtuellen Instrumentes ansehbar ist, dass mit der Steuerschaltung die Anzeige des jeweilig durch Herausziehen des Handgriffs gewählten virtuellen Instrumentes auf dem Bildschirm bewirkbar ist und dass die Auswahl des jeweilig gewählten virtuellen Instrumentes durch ein Verdrehen des Handgriffes um einen vorbestimmten Winkel oder durch eine Betätigung des Handgriffs validierbar ist.

4. Vorrichtung nach einem der Ansprüche 1 bis 3, **dadurch gekennzeichnet, dass** die vordefinierte Position in longitudinaler Richtung oder als Winkeldrehung um die Längsachse des Handgriffs durch die Überschreitung eines vorgegebenen Schwellwertes der durch einen Kraftsensor erfassten Zugkraft beziehungsweise Drehmomentes angebbar ist.

5. Vorrichtung nach Anspruch 1, **dadurch gekennzeichnet, dass** die freigeschaltete Eingabemöglichkeit ein Einschalten eines Mikrofons ist, so dass das gewünschte virtuelle Instrument durch eine Sprachsteuerung auswählbar ist.

6. Vorrichtung nach Anspruch 5, **dadurch gekennzeichnet, dass** die Eingabemöglichkeit ferner die Anzeige der auswählbaren virtuellen Instrumente und/oder der zur Auswahl zu sprechenden Wörter auf dem das Operationsfeld anzeigenden Bildschirm der Simulationseinrichtung umfasst und/oder dass die Auswahl des jeweilig gewählten virtuellen Instrumentes durch ein Vorschieben des Handgriffes über den vorbestimmten Punkt oder Verdrehen des Handgriffes um einen vorbestimmten Winkel oder durch eine Betätigung des Handgriffs validierbar ist.

7. Vorrichtung nach einem der Ansprüche 1 bis 6, **dadurch gekennzeichnet, dass** die virtuellen Instrumente mindestens die Gruppe der Instrumente Klemme, Skalpell, Schere, Koagulationsgerät und Laser umfassen.

8. Verfahren zum Wechseln einer Funktion eines virtuellen Instrumentes, welches für den Einsatz innerhalb einer Simulationseinrichtung für operative Eingriffe vorgesehen ist, wobei verschiedene virtuelle Instrumente über den gleichen realen Handgriff der Simulationseinrichtung verfügen, durch die Schritte **gekennzeichnet**,
- dass eine Betätigung des Handgriffes aus der Gruppe des Zurückziehens des Handgriffs über einen vorbestimmten Punkt in Richtung der Längsachse des Handgriffes oder des zwei- oder mehrfachen Schliessens des Handgriffes innerhalb von vordefinierten Zeitfenstern in einer Steuerschaltung der Simulationseinrichtung eine Eingabemöglichkeit freischaltet,
- wobei über diese Eingabemöglichkeit eines aus einer Mehrzahl von virtuellen Instrumenten auswählbar ist, und
- dass nach der Bestätigung der Auswahl des virtuellen Instrumentes die Anzeige des ursprünglichen virtuellen Instrumentes durch die Anzeige des gewählten virtuellen Instrumentes ersetzt wird.

## Claims

1. Device for changing a function of a virtual instrument which is designed for use in a simulation system for surgical interventions, whereby various virtual instruments can be selected using the same real handle of the simulation device, having a control system, wherein through a defined actuation of the handle by the user an input capability into the control system is enabled by means of which one of a plurality of virtual instruments can be selected, and that, when the virtual instrument is selected, the display of the original virtual instrument can be replaced by the display of the selected virtual instrument, **characterized in that** the unlock can be provided through a defined actuation of the handle by the user which is taken from the group comprising pulling back of the handle past a determined point in the direction of the longitudinal access of the handle or two or more squeezes on the handle within a predetermined time interval.

2. Device according to claim 1, **characterized in that** the enabled input capability comprises a display of virtual instruments available for selection on the screen of the simulation system that is placed the side of the surgery, wherein the control circuit makes it possible to change the virtual instrument currently selected by rotating the handle around the longitudinal access of the handle and wherein the control circuit can be used to display on the screen the virtual instrument currently selected by rotating the handle and wherein the selection of the respective currently selected virtual instrument can be validated by pushing the handle forward passed the predetermined point or by an actuation of the handle.

3. Device according to claim 1, **characterized in that** the enabled input capability comprises a display of the virtual instruments that are available for selection on the screen of the simulation device that is placed the side of the surgery that it is possible with a control system to change the virtual instrument currently selected by pulling the handle farther along its longitudinal access that the control system can be used to display the virtual instrument currently selected on the screen by pulling the handle and that the selection of the virtual instrument currently selected can be validated by rotating the handle by a predetermined angle of an actuation of the handle.

4. Device according to one of the claims 1 to 3, **characterized in that** the predefined position in the longitudinal direction or in the form of an angular rotation around the longitudinal access of the handle can be defined by the passing of a predetermined threshold value of the tenside force or talk measured by a force sensor.

5. Device according to claim 1, **characterized in that** the enabled input capability is an activation of a microphone, so that the desired virtual instrument can be selected by voice commands.

6. Device according to claim 5, **characterized in that** the input capability also comprises a display of the virtual instruments available for selection and/or the words to be spoken to make the selection on the screen of the simulation device at this place at the side of the surgery and/or that the selection of the currently selected virtual instrument can be validated by pushing the handle past the predetermined point or rotating the handle by a predetermined angle or by actuating the handle.

7. Device according to one of the claims 1 to 6, **characterized in that** the virtual instruments comprise at least a group of the instruments clamp, scalpel, scissors, coagulation unit and laser.

8. Method to change a function of a virtual instrument which is designed for use as part of a simulation system for surgical interventions, whereby various virtual instruments have the same real handle of the simulation system, **characterized by** the following steps
- Wherein an actuation of the handle comprising the group of drawing back the handle over a predetermined point in direction of the longitudinal access or two or more squeezes of the handle within the predetermined time interval enables an input capability in the control circuit of the simulation system,
- wherein one of a plurality of virtual instruments can be selected by means of this input capability, and
- wherein after the confirmation of the selection of the virtual instrument the display of the original virtual instrument is replaced by the display of the selected virtual instrument.

## Revendications

1. Dispositif pour changer une fonction d'un instrument virtuel qui est prévu pour l'utilisation en rapport avec un dispositif de simulation pour des interventions chirurgicales, où des différents instruments virtuels utilisent la même poignée réelle du dispositif de simulation, avec une unité de contrôle avec laquelle une possibilité d'entrée est libérée par un actionnement de la part de l'utilisateur, permettant le choix parmi une pluralité d'instruments virtuels, et où, lors d'un choix d'un instrument virtuel, la visualisation d'un instrument virtuel initial est remplacée par la visualisation d'un instrument virtuel choisi, **caractérisé en ce que** la libération est prévue par un actionnement défini de la poignée par l'utilisateur qui est choisi du groupe comprenant retrait de la poignée au delà d'un point défini dans la direction de l'axe longitudinale de la poignée ou fermeture de la poignée par deux fois ou plus dans un intervalle de temps prédéfini.

2. Dispositif selon la revendication 1, **caractérisé en ce que** la possibilité d'entrée libérée comprend une visualisation des instruments virtuels qui peuvent être choisis sur l'écran montrant le champ opératoire où l'unité de contrôle permet, par une rotation de la poignée autour de l'axe longitudinale, un changement de l'instrument virtuel actuellement choisi et où l'unité de contrôle permet la visualisation de l'instrument virtuel choisi sur l'écran suivant une rotation de la poignée et où le choix de l'instrument virtuel actuellement choisi peut être validé par une avance de la poignée au delà d'un point prédéfini ou par un actionnement de la poignée.

3. Dispositif selon la revendication 1, **caractérisé en ce que** la possibilité d'entrée libérée comprend une visualisation des instruments virtuels qui peuvent être choisis sur l'écran du dispositif de simulation montrant le champ opératoire, où l'unité de contrôle permet, par un retrait supplémentaire de la poignée le long de son axe longitudinale, un changement de l'instrument virtuel choisi actuellement, où l'unité de contrôle permet la visualisation d'un instrument virtuel choisi actuellement sur l'écran par retrait de la poignée et où le choix de l'instrument virtuel actuellement choisi peut être validé par une rotation de la poignée autour d'un angle prédéfini ou par un actionnement de la poignée.

4. Dispositif selon une quelconque des revendications 1-3, **caractérisé en ce que** la position prédéfinie dans la direction longitudinale ou par la rotation autour d'un angle autour de l'axe longitudinale de la poignée peut être déclarée par un dépassement d'un certain seuil de la force ou d'un couple de rotation saisis par un capteur de force.

5. Dispositif selon la revendication 1, **caractérisé en ce que** la possibilité d'entrée libérée est l'enclenchement d'un microphone pour que l'instrument choisi peut être choisi par reconnaissance vocale.

6. Dispositif selon la revendication 5, **caractérisé en ce que** la possibilité d'entrée comprend par ailleurs la visualisation des instruments virtuels qui peuvent être choisis et/ou le choix des mots sur l'écran qui montre le champ opératoire du dispositif de simulation et/ou le choix de l'instrument virtuel actuellement choisi par une avance de la poignée au delà d'un certain point ou par la rotation de la poignée autour d'un certain angle ou par un actionnement de la poignée.

7. Dispositif selon l'une quelconque des revendications 1 à 6, **caractérisé en ce que** les instruments virtuels comprennent au moins le groupe des instruments pince, scalpel, ciseaux, unité de coagulation et laser.

8. Méthode pour changer une fonction d'un instrument virtuel, le quel est prévu pour un dispositif de simulation pour des interventions chirurgicales, où des instruments virtuels différents utilisent la même poignée réelle du dispositif de simulation, **caractérisé par** les étapes.
- où l'actionnement de la poignée, pris du groupe de retrait de la poignée au delà d'un certain point dans la direction de l'axe longitudinale de la poignée ou par fermeture de la poignée par deux ou plusieurs fois dans un intervalle de temps prédéfini, libère une possibilité d'entrée dans l'unité de contrôle du dispositif de simulation,
- où cette possibilité d'entrée permet de choisir un instrument virtuel parmi une multitude d'instruments virtuels, et
- où, après la validation du choix de l'instrument virtuel, la visualisation de l'instrument virtuel initial est remplacée par la visualisation de l'instrument virtuel choisi.
